# EUROPEAN PATENT APPLICATION

(11) **EP 1 003 127 A2**
(43) Date of publication of application: **24.05.2000**
(21) Application number: 99308566.1
(22) Date of filing: 28.10.1999
(51) Int. Cl.: G06T 1/00

(54) **Digital signature or electronic seal authentication system and recognized mark management program**

(30) Priority: 30.10.1998 JP 30980698
(71) Applicant: HITACHI, LTD., Chiyoda-ku, Tokyo (JP)
(72) Inventor: Tsuchiyama, Chikako, Tokyo (JP); Toyoshima, Hisashi, Hachioji-shi (JP); Nagai, Yasuhiko, Tokyo (JP)
(74) Representative: Calderbank, Thomas Roger

(57) **Abstract**

A mark management server (101) for certifying digital data based on a digital mark to enable realization of identity authentication and data certification when the digital data is transmitted or received on a network (120A, 120B, 108). The server includes a mark management processor (221) for receiving a mark registration request demanding a new registration or updating of the mark from a mark terminal device (111), embedding identity authentication information obtained by encrypting information for identity authentication of a request originator with use of a cryptograph key in a mark design of the request originator to create a mark, and distributing the created mark to the request originator together with a decoding key for decoding of the identity authentication information attached thereto, and a mark decoding key management processor for registering the decoding key for decoding of the encrypted identity authentication information in a mark decoding key management DB and transmitting the registered decoding key to the associated mark terminal device (111).

## Description

The present invention relates generally to a digital mark authentication system for certifying digital data based on an electronic mark and more particularly, to a technique which can be effectively applied to a digital mark authentication system for certification digital data by a digital mark indicative of imprint of a seal or signature. JP-A-10-11509 specification discloses a document security system.

As commercial transaction is being increasingly spreading on the network, a technique for being able to confirm the truth of information to be transmitted on the network has become important. Identity authentication systems for distinguishing a personal identification from a third unauthorized person, that is, for authenticating the personal identification includes a system utilizing a possession such as a passport or a credit card, a system utilizing a biometric such as a fingerprint, voice print or holograph and a system utilizing secret information such as a password or digital signature. However, when application of such systems is limited to the network, the systems utilizing possession or secret information are generally used.

With respect to confirmation of tampering of information in the course of information transmission, in secure electronic transactions (SET) used for safe credit settlement of account in electronic commerce (EC) utilizing the Internet, authentication of card's possessor is carried out based on a digital signature. The digital signature is usually a cipher document obtained by encrypting a compressed document or message to be transmitted with use of a sender's cryptograph key, and the cipher document can be decoded into the original compressed document with use of sender's decode key (public key). That is, the document receiver can conduct document authentication, that is, can confirm that the message is not tampered by comparing the compressed document obtained from the received message with the compressed document decoded with use of the accepted digital signature.

The receiver of digital data such as a document cannot confirm the truth of the digital data or its sender only by looking at the digital data. In real world, you can rest assured by looking at a seal affixed upon a paper. However, such a digital signature cannot give you a feeling of security even if you look at it.

Meanwhile, in a conventional electronic seal system, imprint of a seal recognizable by looking at it can be used. However, the imprint of a seal per se is a mere design. For this reason, in order to confirm a sender of digital data such as a document, it has been necessary for the receiver of the digital data to examine a history of log information or the like.

It is therefore an object of the present invention to provide a technique which can solve the above problems in the prior art and can realize authentication or data authentication when digital data is sent or received.

Another object of the present invention is to provide a technique for authenticating a send message containing a visible mark recognizable by human eyes.

In accordance with an aspect of the present invention, there is provided a digital mark certification system for providing a mark for data certification based on a digital mark, which comprises:
a mark management processor (221) for embedding certification information of a mark creation demander in a demander's mark design to create a visible mark on a display in response to demander's request; and
a mark distributor (200-222) for distributing a decoding key for decoding of the mark and the visible mark to a demander's terminal device.

It is visually recognized that the certification information is embedded in the created mark. The certification information can be obtained by encrypting information including a demander's feature with use of a cryptograph key. It is possible to embed in the mark both the whole certification information encrypted and the original or non-encrypted certification information or both the original certification information and the digital signature of the original certification information.

In response to the mark updating request, the mark management processor (221) can encrypt information including demander's other feature with use of the cryptograph key to create demander's other certification information, and can embed the other certification information in the demander's mark design to create the mark.

In accordance with another aspect, there is provided a terminal device for attaching a mark for data certification based on a digital mark to digital data, which terminal device comprises:
a mark processor (312) for transmitting a mark creation request to a digital mark certification system, for receiving from the system a mark obtained by encrypting information including demander's feature with use of a cryptograph key and embedding the certification information in demander's mark design, and for storing the mark therein;
a decoding key database (315) for receiving and storing a decoding key for decoding of the mark; and
a transmitter (303) for encrypting log information on the digital data with use of the cryptograph key, embedding the encrypted log information in the mark, and transmitting the mark together with the digital data.

In accordance with yet a further aspect of the present invention, there is provided a certification system for certifying data based on a digital mark, which comprises:
a mark management processor (221) for embedding certification information of a mark creation demander in a demander's mark design to create a visible mark on a display in response to demander's request;
a mark distributor (200-222) for distributing a decoding key for decoding of the mark and the visible mark to a demanders terminal device; and
a transmitter (303) for encrypting log information on the digital data with use of the cryptograph key, embedding the encrypted log information in the mark, and transmitting the mark together with the digital data.

The mark certification processor of the electronic mark authentication system for certifying digital data based on a mark indicative of a seal image or a signature can attach to the digital data a mark obtained by embedding identity authentication information and digital data certification information in a mark design and can perform the digital data certification with use of the certification information in the mark.

When a mark registration processor of the mark terminal device in the present invention transmits to the mark management server a mark registration request demanding a new registration or updating of a mark such as an electronic seal, the mark management processor of the mark management server receives the mark registration request, embeds identity authentication information obtained by encrypting information for identification of the request originator with use of a cryptograph key in a mark design such as a seal image design to create a mark, attaches a decoding key for decoding of the identity authentication information to the created mark, and distributes the key-attached mark to the request originator.

A mark decoding key management processor of the mark management server registers the decoding key for decoding of the encrypted identity authentication information in a mark decoding key management DB, and transmits the registered decoding key to the associated mark terminal device.

The mark registration processor of the mark terminal device accepts the mark from the mark management processor of the mark management server. A decoding key storage processor of the mark terminal device receives the decoding key from the mark digital data management processor and stores the decoding key in a digital data DB.

With respect to digital data such as a document having a mark attached thereto, a mark attachment processor of the mark terminal device encrypts digital data certification information containing its featured information and a mark attachment serial number with use of a cryptograph key unique to the user, embeds the encrypted digital data certification information and mark attachment serial number in the mark having the identity authentication information of the user of a digital data sender embedded therein, and attaches the mark at a selected position of the digital data. It is possible to embed in the mark both the whole certification information encrypted and the original or non-encrypted certification information or both the original certification information and the digital signature of the original certification information.

when the digital data attached by the mark is transmitted to the mark terminal device of another user in such a manner as mentioned above, a mark certification processor of the mark terminal device extracts the identity authentication information from the mark attached to the digital data, and collates the decoding key attached for decoding of the identity authentication information with an associated decoding key previously stored in the decoding key DB. When determining a coincidence between the decoding keys, the mark certification processor decodes the identity authentication information extracted from the mark with use of the decoding key into the identity authentication information and displays it. When determining a non-coincidence between the decoding keys, the mark certification processor displays an error message.

The mark certification processor of the mark terminal device also extracts the digital data certification information from the mark having the digital data attached thereto, decodes the extracted digital data certification information with use of the decoding key, extracts featured information from the digital data having the mark attached thereto, compares the featured information extracted from the digital data with the featured information in the digital data certification information. When determining a coincidence between the featured information, the mark certification processor displays the digital data certification information; whereas, when determining a non-coincidence therebetween, the mark certification processor displays an error message.

As has been mentioned above, since the electronic mark authentication system of the present invention attaches to digital data a mark having the identity authentication information and digital data certification information embedded therein and certifies the digital data with use of the certification information in the mark, the system can realize the identity authentication and data certification while securing visuality of a matter symbolic of the data sender when the digital data is transmitted and received on a network.
Fig. 1 schematically shows an arrangement of an electronic seal authentication system in accordance with an embodiment of the present invention;
Fig. 2 schematically shows an arrangement of a seal mark management server 101 in the present embodiment;
Fig. 3 schematically shows an arrangement of an employee terminal 111 in the present embodiment;
Fig. 4 shows an example of data of a seal mark management database (DB) 210 in the present embodiment;
Fig. 5 shows an example of data of a seal mark public key management DB 211 in the present embodiment;
Fig. 6 shows an example of authentication data in the present embodiment;
Fig. 7 shows an example of document authentication data in the present embodiment;
Fig. 8 shows examples of seal images and seal marks in the present embodiment;
Fig. 9 shows an image example on an initial display screen in the present embodiment;
Fig. 10 is a flowchart showing a procedure of seal mark registering operations in the present embodiment;
Fig. 11 is a flowchart showing a procedure of seal mark imprinting operations;
Fig. 12 shows images of processing display screens associated with a processing flow of Fig. 11 in the present embodiment;
Fig. 13 is a flowchart showing a procedure of authentication operations in the present embodiment;
Fig. 14 shows images of the processing display screens associated with a processing flow of Fig. 13 in the present embodiment;
Fig. 15 is a flowchart showing a procedure of document authentication operations in the present embodiment; and
Fig. 16 shows images of the processing screens associated with a processing flow of Fig. 15 in the present embodiment.

Explanation will be made as to an electronic mark authentication system for performing authentication and document certification with use of a digital signature or a seal in a corporation intra-network and in an inter-corporation network in accordance with an embodiment of the present invention.

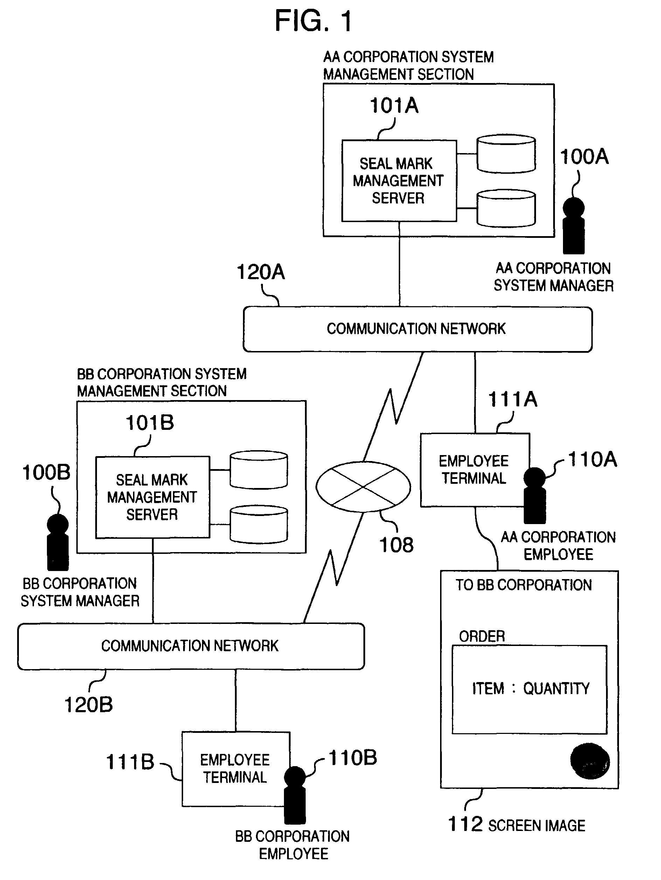

Fig. 1 schematically shows an arrangement of a digital mark authentication system in accordance with the present embodiment. The electronic mark authentication system of the present embodiment is used by a plurality of system managers 100A to 100B (which will be sometimes referred to merely as the system manager 100, hereinafter) for managing seal marks or signature marks and by a plurality of employees 110A to 110B (which will be sometimes referred to merely as the employee 110, hereinafter). In the system, as shown in Fig. 1, a mark management server 101A (which will be sometimes referred to merely as the mark management server 101, hereinafter) and an employee terminal 111A (which will be sometimes referred to merely as the employee terminal 111, hereinafter) are mutually connected through a communication network 120A such as a corporation intranet (which network will be sometimes referred to merely as the communication network 120, hereinafter). Also connected to the communication network 120 is a system or client terminal of a BB corporation similar to the above through the Internet 108.

The mark used herein refers to a mark such as a seal or a signature, which is in the form of an image design and which may have an image design shape more redundant or unclear than usual types used in documents, which is visual image data containing an element indicative of mark user's identity, and which is used to confirm whether or not an unauthorized person or third party impersonates its authorized user to affix the seal mark or to affix a signature upon a document (which confirmation will be also referred to merely as the identity authentication, hereinafter) and to confirm whether or not the document having the seal or signature affixed thereupon is falsified (which confirmation will also be referred to merely as the document certification, hereinafter). The image design may be more redundant than type encoded information.

The mark management server 101 acts to perform the identity authentication or document certification in a corporation intra-network or inter-corporation network transactions managed by the system manager 100. The mark management server 101, in response to a request from the employee 110, registers a mark in a mark management DB (to be explained later) as information necessary for its authorized user's identity authentication. At this time, the design of the mark can be freely created by the employee 110 in such a manner as to digitize an actual seal image, signature, face picture, etc. by means of a scanner, but in order to prevent illegal registration, its creator is checked by the employee ID or the like.

The employee 110 creates documents or the like necessary for business with use of the employee terminal 111 or conducts data transfer with the system manager 100. Each mark is managed by the employee terminal 111. When a modification of information contained in a seal or signature such as corporation's section is requested by its creator , the system manager 100 updates the mark and transmits the updated mark to the employee terminal 111. A screen image 112 shows an example of a display screen when digital data with a seal mark is displayed.

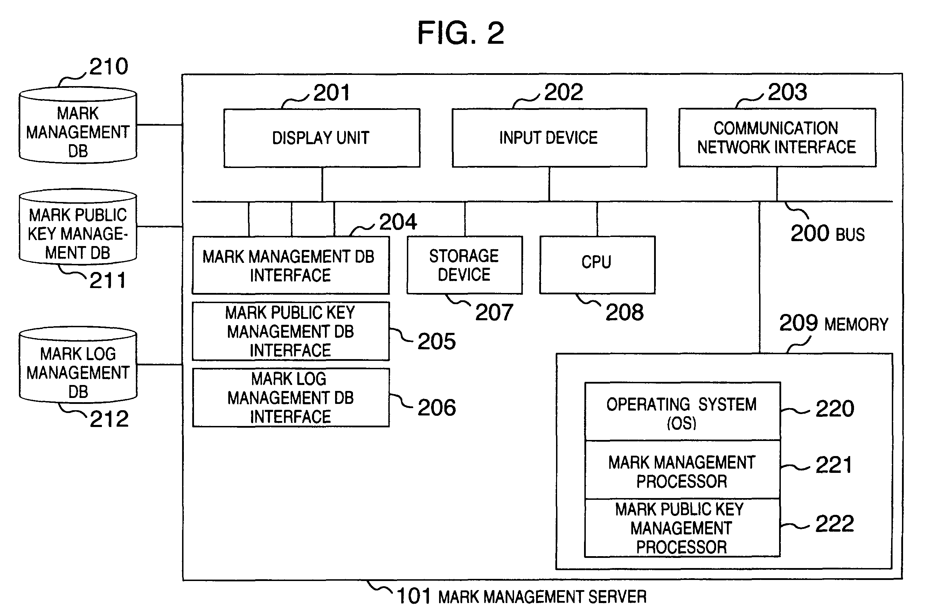

Fig. 2 schematically shows an arrangement of the mark management server 101 in the present embodiment. The mark management server 101 of the present embodiment includes a mark management processor 221 and a mark public key management processor 222, as shown in Fig. 2.

The mark management processor 221 receives a mark registration request demanding new registration or updating of a mark from the employee terminal 111 via the communication network 120A, creates a mark by embedding identity authentication information obtained by encrypting information for identity authentication of the request originator by a secret key into the seal image or signature design of the request originator by an electronic watermarking technique (which will be explained later), attaches a public key for decoding of the identity authentication information to the created mark, and then distributes it to the request originator.

The mark public key management processor 222 registers the public key for decoding of the encrypted identity authentication information in the seal mark public key management DB 211, and transmits the registered public key to the employee terminal 111.

A program for causing the mark management server 101 to function as the mark management processor 221 and mark public key management processor 222, may be stored in a recording medium such as a CD-ROM and then recorded in a magnetic disk or the like and then loaded in a memory to be executed. The medium for recording the program therein may be another medium other than the CD-ROM.

As shown in Fig. 2, the mark management server 101 in the present embodiment includes a display unit 201, an input device 202, a communication network interface 203, a mark management DB interface 204, a mark public key management DB interface 205, a mark log management DB interface 206, a storage device 207, a CPU 208, a memory 209, these devices being interconnected by means of a bus 200. Also connected to the mark management server 101 as external storage devices are a mark management DB 210, a mark public key management DB 211 and a mark log management DB 212.

The display unit 201, which comprises a CRT, a liquid crystal display or the like, is used to display a message to inform the system manager 100 using the mark management server 101 of the message. The input device 202 is used for the system manager 100 using the mark management server 101 to enter data or an instruction. The communication network interface 203 functions to perform data transfer with the employee terminal 111 or the mark management server 101B of another corporation via the communication network 120.

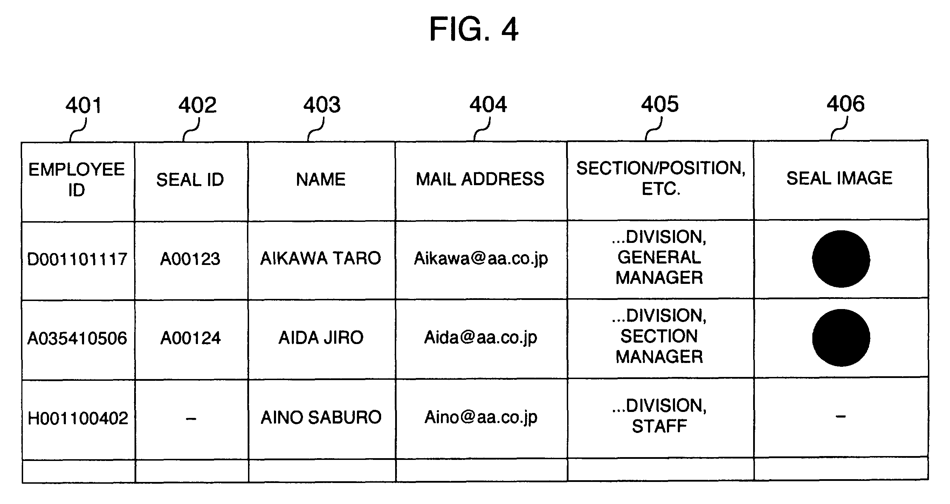

The mark management DB interface 204 performs data transfer with the mark management DB 210. The mark management DB 210 manages data including employee IDs, seal/signature IDs and seal images/signatures as associated therewith, for example, as shown in Fig. 4.

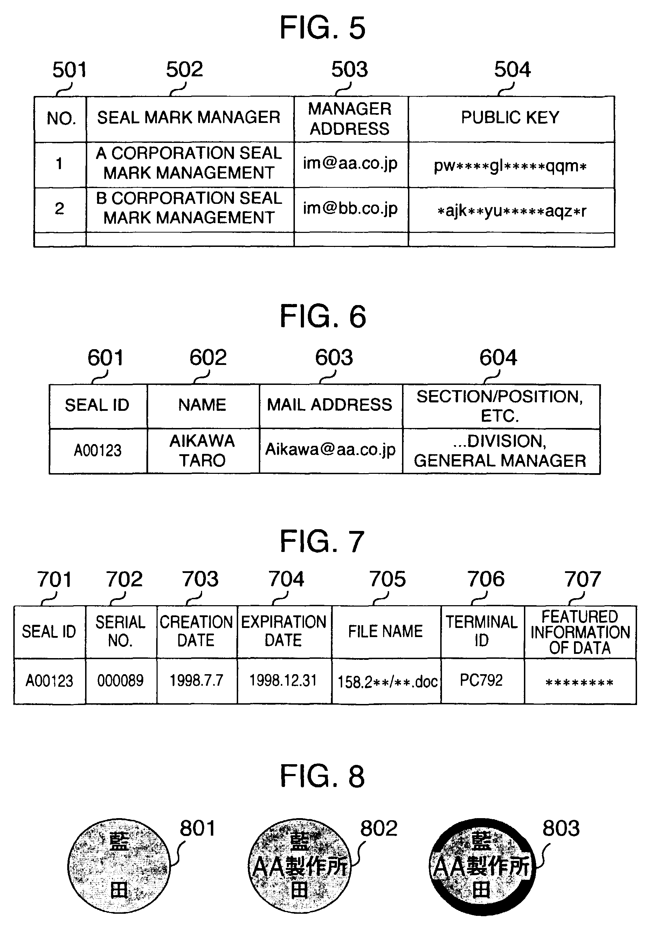

The mark public key management DB interface 205 performs data transfer with the mark public key management DB 211. The mark public key management DB 211 manages data including mark managers of information system management sections, etc. of transacting corporations and public keys for identity authentication thereof as associated therewith, for example, as shown in Fig. 5.

The mark log management DB interface 206 is provided to perform data transfer with the mark log management DB 212. The mark log management DB 212 manages document certification data embedded in marks when the marks are affixed upon digital data at the employee terminal 111 as associated therewith, for example, as shown in Fig. 7.

The storage device 207, which comprises a hard disk, floppy disk or the like, is used to permanently store therein a program or data to be used in the mark management server 101.

The CPU 208 performs general control over the constituent elements of the mark management server 101 or performs various types of calculations. The memory 209 temporarily stores therein programs necessary for processing the above operations by the CPU 208 such as an operating system (OS) 220, mark management processor 221 and mark public key management processor 222.

In this case, the OS 220 is a program for realizing functions of file management, process management and device management to control the entire mark management server 101.

The mark management processor 221 determines whether or not a mark registration/modification request issued from the employee terminal 111 is an illegal request from a third party, embeds the identity authentication information in the transmitted signature or seal image design or in the design managed by the mark management DB 210 when determining the request is legal, updating the mark management DB 210 based on the embedding operation, transmits the mark to the request originator, and stores log information transmitted at the time of affixing the seal mark in the mark log management DB 212.

It is assumed that the mark management DB 210 can be updated only by an authorized person. In this connection, the identity authentication information to be embedded in the design is as shown in Fig. 6. A technique for embedding specific information in image data is known as "electronic watermarking". There are two ways of watermarking, that is, invisible watermarking of embedding information in such an invisible manner that human cannot distinguish it and visible watermarking of embedding information in such a visible manner that human can see it. It is the that the invisible watermarking has a limitation in the quantity of information to be embedded, but can be valid in not a few cases. More specifically, so long as the mark image can tell us what it means by its symbol or matter, that is, we can know what the mark tell us, the design can be somewhat modified without trouble. In such a case, a certain amount of much information can be embedded by combining the above visible and invisible watermarking methods as shown in Fig. 8.

The mark public key management processor 222 confirms a sender of a mark affixed upon a digital document outside the corporation, that is, registers and manages a public key necessary for the identity authentication in the mark public key management DB 211, transmits a new public key to the public key DB connected to the employee terminal 111 when the new public key is registered in the mark public key management DB 211, and in the presence of a public key transmission request, transmits the corresponding public key to the request originator.

It is also assumed that, when receiving a public key from a corporation outside my corporation, for the purpose of preventing a third party impersonate the system manager 100 of my corporation, my corporation performs the identity authentication of the public key sender and then accepts the public key stored in a floppy disk (FD) or the like.

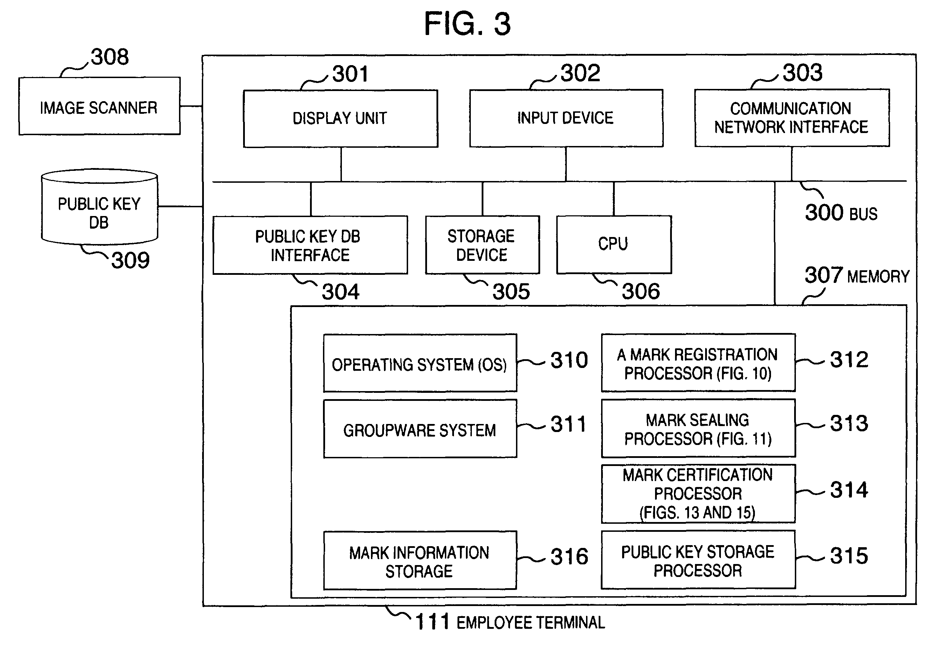

Fig. 3 schematically shows an arrangement of the employee terminal 111 in the present embodiment. As shown in Fig. 3, the employee terminal 111 of the present embodiment has a mark registration processor 312, a mark sealing processor 313, a mark certification processor 314 and a public key storage processor 315.

The a mark registration processor 312 transmits a mark registration request for new registration or updating of a mark to the mark management server 101, and accepts from the mark management server 101 a mark created by embedding, in the design of the request originator, identity authentication information obtained by encrypting information for authentication of the request originator with use of a secret key.

The mark sealing processor 313 encrypts document certification information containing featured data of a document having a mark affixed thereupon as well as a serial number with use of a secret key unique to the user, embeds the encrypted document certification information and serial number in the mark having the identity authentication information embedded therein, and affixes the mark at a selected position in the document.

The mark certification processor 314 performs the identity authentication operation by extracting identity authentication information from a mark affixed in a document, collating a public key attached thereto for decoding the identity authentication information with a corresponding public key stored in a public key DB 309 to check for coincidence therebetween, decoding and displaying, in the case of coincidence, the identity authentication information extracted from the mark with use of the public key, and displaying, in the case of non-coincidence, an error message; and also performs the data certification operation by extracting document certification information from the mark affixed in the document, decoding the document certification information with use of the public key, extracting featured information from the document affixed with the mark, comparing the featured information extracted from the document with the featured information in the document certification information extracted from the mark to check for coincidence therebetween, displaying, in the case of coincidence, the document certification information, and displaying, in the case of non-coincidence, an error message. The public key storage processor 315 receives the public key for decoding of the identity authentication information from the mark management server 101 and stores the public key in the public key DB 309.

A program for causing the employee terminal 111 to function as the mark registration processor 312, mark sealing processor 313, mark certification processor 314 and public key storage processor 315, is assumed to stored as recorded in a magnetic disk or the like having a recording medium such as a CD-ROM and then loaded in the memory to be executed. The medium for recording the program may be any medium other than the CD-ROM.

As shown in Fig. 3, the employee terminal 111 in the present embodiment has a display unit 301, an input device 302, a communication network interface 303, a public key DB interface 304, a storage device 305, a CPU 306 and a memory 307, these devices being interconnected by means of a bus 300. When it is desired to use such a design as so far used in real world, the design may be read into the terminal computer in the form of a bit map or the like with use of an image scanner 308 connected thereto.

The display unit 301, which comprises a CRT, a liquid crystal display or the like, is used to display a message or the like to tell it the employee 110 using the employee terminal 111. The input device 302, which comprises a keyboard or a mouse, is used for the employee 110 using the employee terminal 111 to enter data or instructions. The communication network interface 303 performs data transfer with the mark management server 101 or employee terminal 111B via the communication network 120.

The public key DB interface 304 performs data transfer when the public key DB 309 is present. The storage device 305, which comprises a hard disk, floppy disk or the like, is used to permanently store programs or data to be used at the employee terminal 111.

The CPU 306 performs general control over the constituent elements of the employee terminal 111 and performs various sorts of calculating operations. The memory 307 temporarily stores therein such programs necessary for the CPU 306 to perform the above operations as an operating system (OS) 310, a groupware system 311, a mark certification processor 314 and a mark information storage 316.

In this case, the OS 310 is a program for realizing functions of file management, process management and device management to perform control of the entire employee terminal 111. The groupware system 311 functions to perform transfer of digital data with inside and outside my corporation to display necessary data, and has an interface with the mark certification processor 314 to process authentication information attached to the digital data. In this conjunction, the groupware system 311 is not limited to a specific groupware system, but may be any type of system so long as it is an application system for handling the digital data. In some cases, the mark certification processor 314 may be an independent application system running on the OS 310.

The a mark registration processor 312 acts to create a design for mark registration, transmits a mark registration request to the mark management server 101, and receives a mark from the mark management server 101.

The mark sealing processor 313 performs operations for the employee 110 to digitally affix a signature or a seal upon digital data at the employee terminal 111. More specifically, the mark sealing processor 313 displays necessary digital data, calls a mark corresponding to the ID of the employee when a password for the employee ID is entered, embeds, in a specific block, information obtained by encrypting selected document certification information and signature/seal information such as a seal serial number, etc. of the mark with use of a unique secret key, and affixes the mark at a specified position in the document.

The mark certification processor 314 checks for a sender or contents of the digital data received at the employee terminal 111 of the employee 110. More in detail, the mark certification processor 314 displays necessary digital data, displays the identity authentication information embedded in the mark after decoded with use of a public key previously distributed from the mark management server 101, displays the document certification information embedded in the mark after decoded with use of the public key attached to the mark, displays an error message when the document certification information cannot be decoded with use of the public key, checks on information about the expiration date, file name, etc. of the displayed digital data, and modifies the above design to an invalid design when judging invalid.

The mark information storage 316 temporarily stores therein the mark or public key called at the employee terminal 111 by the mark certification processor 314.

When a plurality of public keys are required for confirmation of the identity authentication information as in network transactions between corporations, the public key DB 309 is arranged to be connected to the employee terminal 111 or communication network 120 so that the mark public key management DB 211 can transmit necessary the public keys to the public key DB interface 304 and thus the employee can look up these keys on the employee terminal 111. When marks are used only in a corporation intra-net, the public keys may be previously given to the employee terminal 111 and how to store the public keys is not limited.

Fig. 4 shows an example of data of the mark management DE 210 in the present embodiment. The mark management DB 210 stores therein employee IDs 401, seal IDs 402, names 403, mail addresses 404, department/position information 405 and seal images 406 according to a specific representation format. When a new mark was registered or the existing mark department/position information 405 was modified, for example, the mark management DB 210 is updated.

Fig. 5 shows an example of data of the mark public key management DB 211 in the present embodiment. The mark public key management DB 211 stores therein data numbers 501, mark managers 502, manager addresses 503 and public key data 504 as integrally shown according to a specific representation format. The mark public key management DB 211 is a DB for managing the public key data 504 for identity authentication. When a corporation having a new mark was added or when the public key data 504 was modified, the mark public key management DB 211 is updated. In this connection, when an expiration date or the like is previously set for the public key data 504, the mark public key management DB 211 also manages the expiration date data.

Fig. 6 shows an example of data of the identity authentication data in the present embodiment. Fig. 6 shows an example of the identity authentication data when the mark management processor 221 embeds the identity authentication information in a seal image in response to a request from the employee 110 in the mark management server 101.

Seal ID 601, name 602, mail address 603 and section/position 604 are encrypted by the mark management processor 221 with use of a secret key managed by the mark management server 101, and then embedded as a mark entity. Upon the embedding, as in the case of a seal image 802 shown in Fig. 8 for example, an invisible watermark is embedded in a name part of the seal image and a corporation name is embedded in the form of a visible watermark. That is, the present invention is previously divided into two or more blocks and identity authentication information is embedded in specific one of the block. In the case of a seal such as a corporation seal, a section of the signature/seal in charge can be used as the identity authentication information in some cases.

Fig. 7 shows an example of data of the document certification data in the present embodiment. More specifically, Fig. 7 shows an example of the document certification data embedded as document certification information when the employee 110 affixes a mark in digital data on the employee terminal 111.

The mark sealing processor 313 of the employee terminal 111 encrypts a seal ID 701, mark sealing serial NO. 702, a creation date 703, expiration date 704, file name 705, terminal ID 706 and digital data feature information 707, with use of a secret key managed by the mark sealing processor 313 at the employee terminal 111, and then embeds the encrypted information as a mark entity. As in the case of a seal image 803 shown in Fig. 8 for example, document certification information is embedded in a peripheral part of the seal image other than a block having the identity authentication information embedded therein.

The digital data feature information 707 include, for example, information on so-called "check sum" of a character data code added as regarded as a numeral value and a compressed document having contents of digital data.

Shown in Fig. 7 is an example of data of the mark log management DB 212. The mark sealing processor 313 of the employee terminal 111 transmits such data as shown in Fig. 7 to the mark management server 101 as log information at the time of affixing a signature/seal, and the mark management processor 221 stores the log information in the mark log management DB 212.

In this case, it is assumed that data necessary for the identity authentication and document certification are not limited to the examples of Figs. 6 and 7, but data for the authentication and the certification may include any conditions required as record information of electronic data at the time of obtaining the certification of ISO9001.

Fig. 8 shows examples of seal and mark images in the present embodiment. The identity authentication information is embedded in such a seal image 801 as shown in the drawing. In this case, the seal image is previously divided into two or more blocks so that the identity authentication information and document certification information are embedded in specific ones of the blocks.

For example, the block division is carried out in such a manner that the identity authentication information is embedded in a name part and in a corporation name part of visible watermark as in the case of the seal image 802 and the document certification information is embedded in a peripheral part of the seal image as in the case of the seal image 803. When the certification information is decoded in the mark certification processor 314 of the employee terminal 111, information embedded in the corresponding block is automatically extracted.

A design of an individual private seal has been employed as the seal image design example in the seal image 801. However, the design is not limited to the design example of the seal image 801, but a design such as a dated corporation section seal or a sign may be employed, or at the time of using the design as a corporation seal, its corporation title can be employed. In this connection, it is important that the seal image design be not a mere image design but such a seal image design as to give us a reliable impression as if the certification information were embedded.

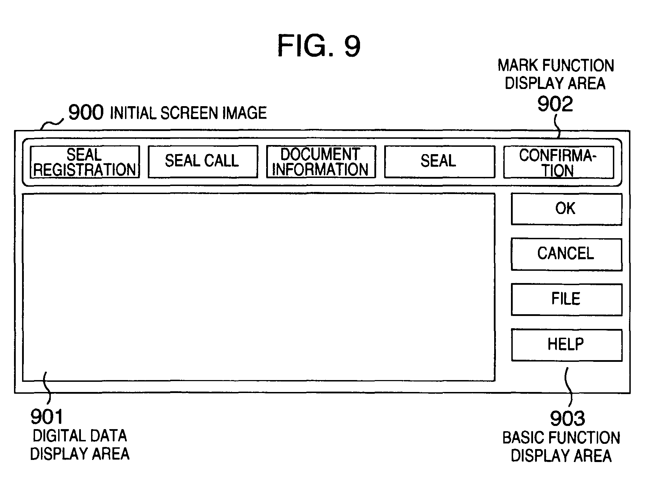

Explanation will next be made as to the operation of the electronic authentication system in accordance with the present embodiment. Fig. 9 shows an example of initial display screen image in the present embodiment. More specifically, Fig. 9 shows an example of an initial display screen image of the electronic authentication system displayed on the employee terminal 111.

The initial screen 900 includes a digital data display area 901 for display of a necessary digital document or the like, a mark function display area 902 having mark function icons arranged thereon, and a basic function display area 903 having basic function icons of, e.g., OK, cancel and file arranged thereon. However, the area array of the initial screen 900 is given as merely an example and is not limited to the illustrated array.

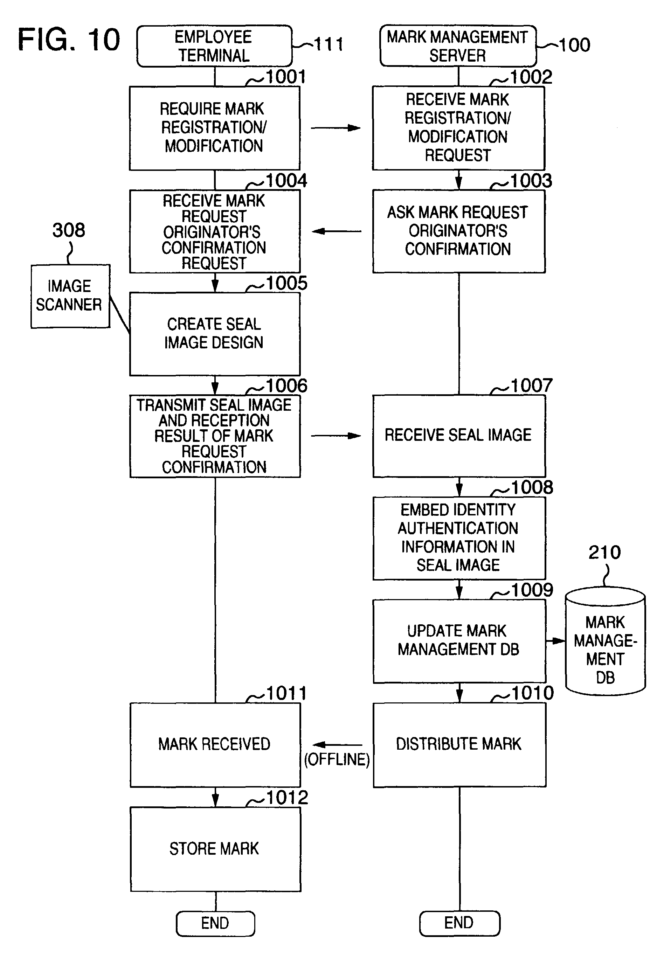

Fig. 10 is a flowchart showing a procedure of mark registering operations in the present embodiment. More specifically, Fig. 10 shows flows of mark registering operations between the employee terminal 111 and mark management server 101.

When the employee 110 first clicks a registration button in the mark function display area 902 on the initial screen 900 of Fig. 9, the a mark registration processor 312 transmits a mark registration request to the mark management server 101 (step 1001). The mark management server 101 when receiving the mark registration request, reads out, at the mark management processor 221, the mail address 404 of the request originator from the mark management DB 210 on the basis of the employee ID 401 of the registration request originator, and transmits a mark request/ modification confirmation request to the mail address 404 of the request originator (steps 1002 and 1003).

The mark registration processor 312 of the employee terminal 111 receiving the confirmation request transmits, together with a result of the mark request confirmation, a to-be-registered or to-be-modified seal image design created with use of an image scanner or the like to the mark management server 101 (steps 1004 and 1005). The seal or signature image design may be created through digital data processing by use of a digital camera and digital contents preparation software in place of using the scanner.

The mark management server 101, when receiving the seal image and the mark request confirmation result, encrypts, at the mark management processor 221, the identity authentication information with use of the secret key of the mark management server 101 managed thereby, and embeds the encrypted identity authentication information in the received seal image design (step 1008).

After the mark management server 101 updates information on the mark registered or modified in the mark management DB 210 (step 1009), the created mark is distributed, together with a public key for decoding the identity authentication intonation, to the employee 110 of the request originator in the form of an floppy disk (FD) (step 1010). The employee 110 stores the distributed mark in the employee terminal 111 (steps 1011 and 1012).

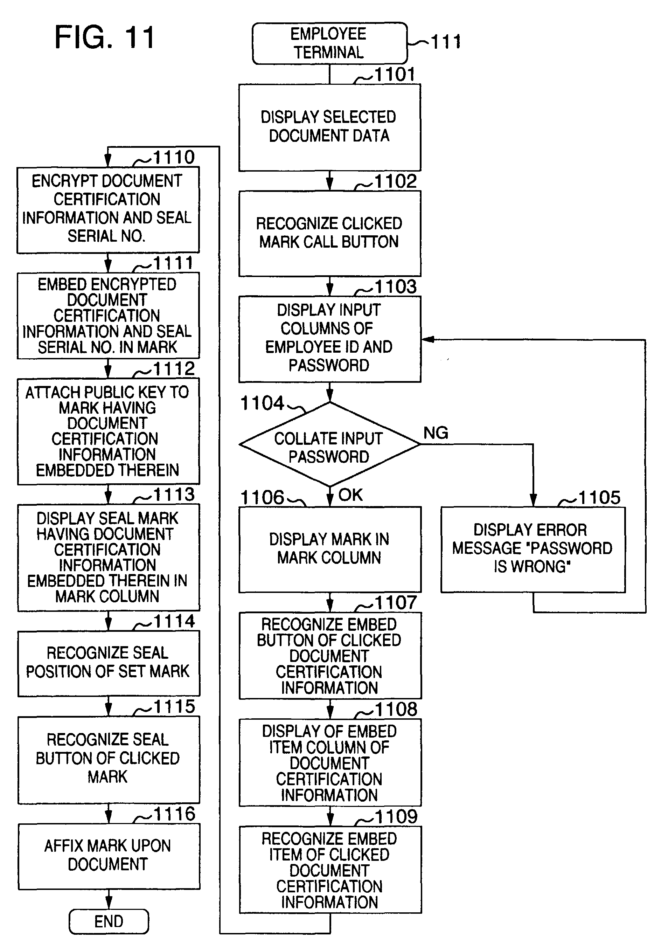

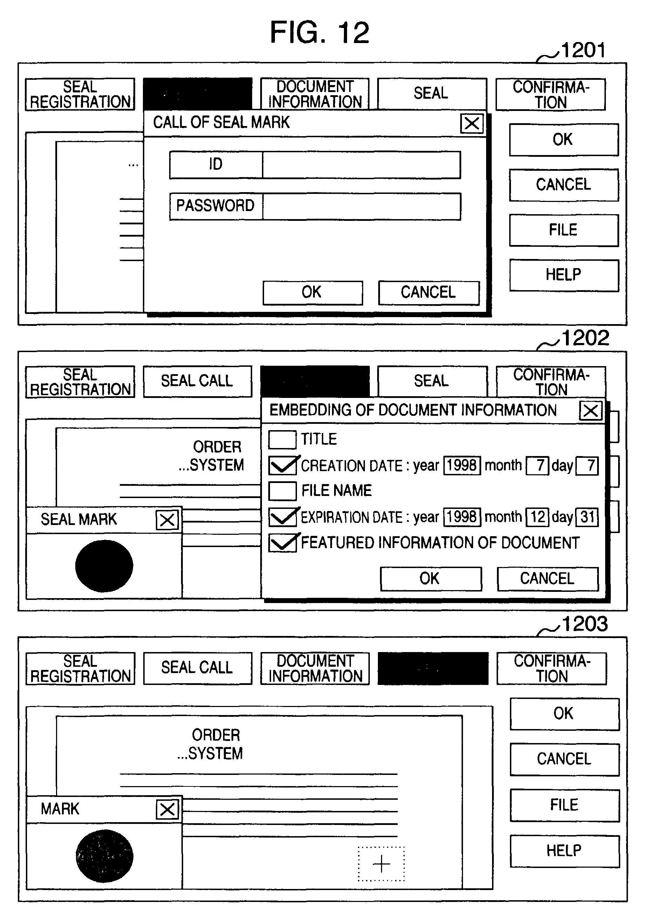

Fig. 11 is a flowchart showing a procedure of mark sealing operations in the present embodiment. More specifically, Fig. 11 shows flows of affixing a mark upon a document having document certification information embedded therein at the employee terminal 111. Fig. 12 shows images of a processing display screen corresponding to the processing flow of Fig. 11 in the present embodiment. By referring to Figs. 11 and 12 and also Fig. 9, the aforementioned processing flow will be explained.

The employee 110 first selects document data to be sealed with use of a file button in the basic function display area 903 to display the selected document data in the digital data display area 901 (step 1101).

When the operator clicks a mark call button in the mark function display area 902, the mark sealing processor 313 causes appearance of input columns of the employee ID 401 and password like a processing screen image 1201 in Fig. 12 (steps 1102 and 1103).

The mark sealing processor 313 collates the entered password with a corresponding password previously stored in the employee terminal 111. When determining a non-coincidence therebetween, the mark sealing processor 313 displays an error message; whereas, when determining a coincidence therebetween, the mark sealing processor 313 displays the mark in the mark column (steps 1104 to 1106).

When the operator next clicks a document information embed button, the mark sealing processor 313 causes appearance of item columns of document certification information as in a processing screen image 1202 in Fig. 12 (steps 1107 and 1108).

When the operator selects necessary items and click an OK button, the mark sealing processor 313 encrypts the selected document information and a secret key unique to each employee for which a sealing serial number is previously determined to embed the encrypted information in the mark, and attaches a public key for decoding thereof to display the mark in the mark column (steps 1109 to 1113).

When the operator selects a sealing position and clicks a sealing button in the mark function display area 902, the mark sealing processor 313 affixes the mark at the selected position in the document (steps 1114 to 1116). After the mark is affixed, the illustrated order can be transmitted. In this connection, the mark having the information embedded therein can also be independently transmitted without affixing the mark upon the document. In this connection, the public key unique to the employee and necessary for decoding of the document certification information may be acquired at the time of the identity authentication without being attached to the mark.

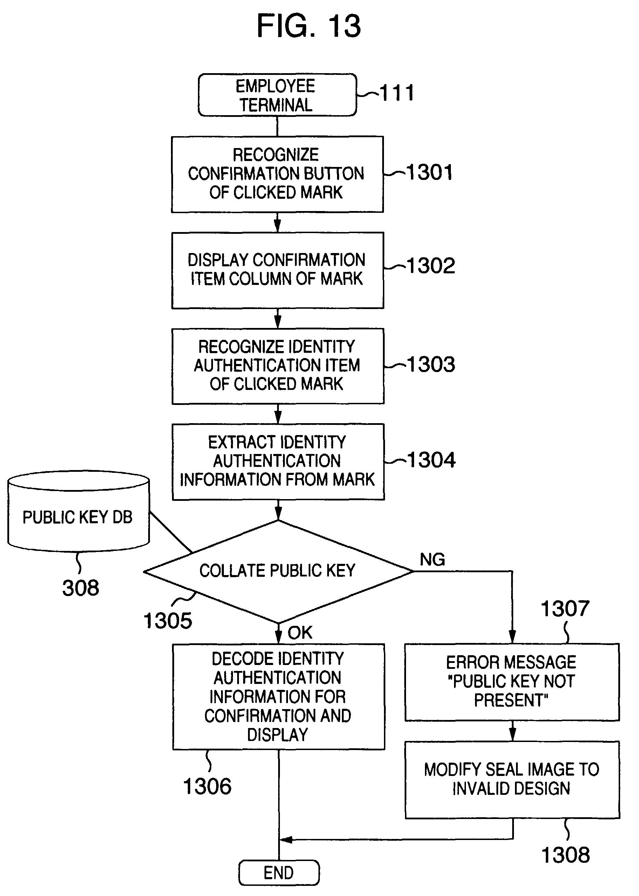

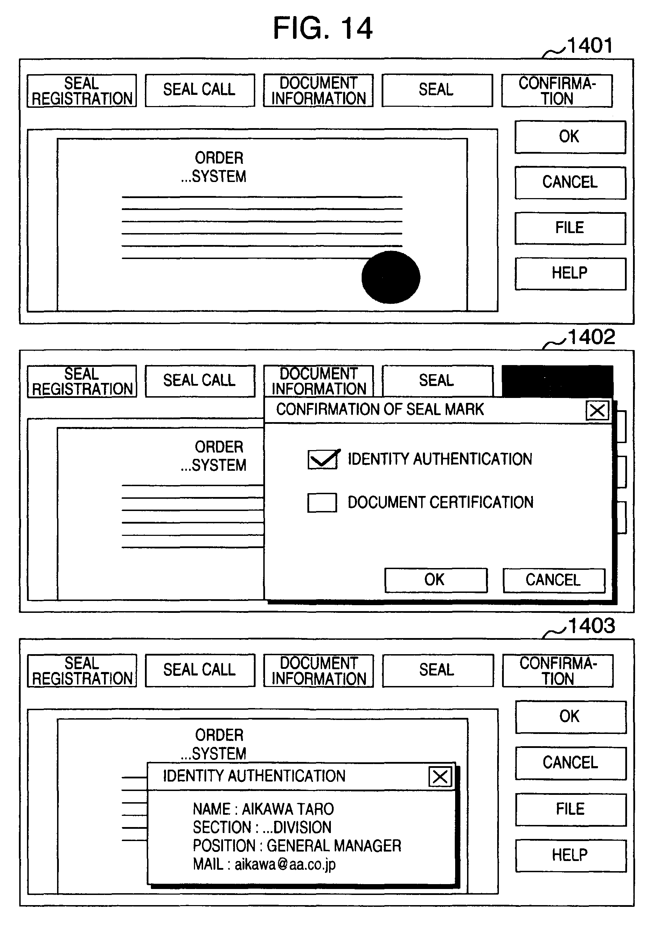

Fig. 13 is a flowchart showing a procedure of identity authenticating operations in the present embodiment. Fig. 14 shows images of the processing display screens corresponding to the processing flow of Fig. 13 in the present embodiment. When the employee 110 first displays digital data having a mark attached therein on the employee terminal 111 as in a processing screen image 1401 in Fig. 14 and then clicks a mark confirmation button, the mark certification processor 314 displays mark confirmation item columns (steps 1301 and 1302).

When the employee 110 clicks the mark identity authentication item like a processing screen image 1402 in Fig. 14, the mark certification processor 314 extracts the identity authentication information from the mark (step 1303). The public key for decoding of the extracted identity authentication information is collated with a corresponding public key in the employee terminal 111 or in the public key DB 309 to find a coincidence or non-coincidence therebetween (step 1305).

When determining a coincidence between the above public keys, the mark certification processor 314 decodes the identity authentication information extracted from the mark, and displays contents of the decoded identity authentication information in such a manner as to be able to confirm the contents like a processing screen image 1403 in Fig. 14 (step 1306). When determining a non-coincidence therebetween, the mark certification processor 314 displays an error message (step 1307). Further, when displaying the error message, the mark certification processor 314 modifies the mark to such an invalid design, e.g., by erasing its seal image or applying a mark X thereon (step 1308).

When it is desired to ask its authorized user the contents displayed as the identity authentication information for confirmation, the employee sends a mail addressed to a confirmation request mail address given in the identity authentication information. In this connection, how to display a result of the identity authentication is not limited to the examples of the processing screen image of Fig. 14 but may be arbitrarily modified. For example, the error message can be given in the form of a voice.

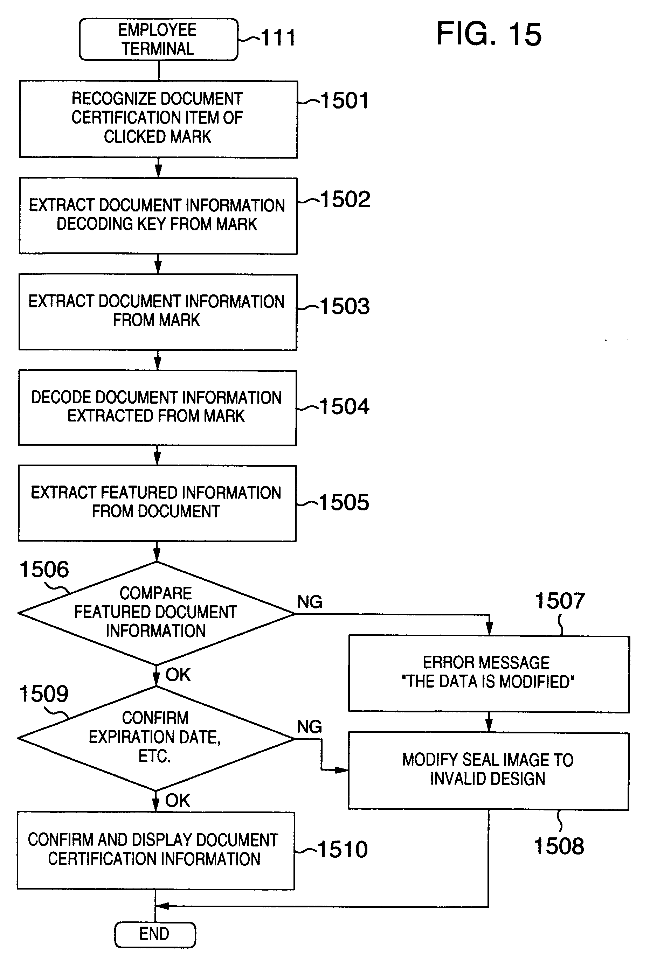

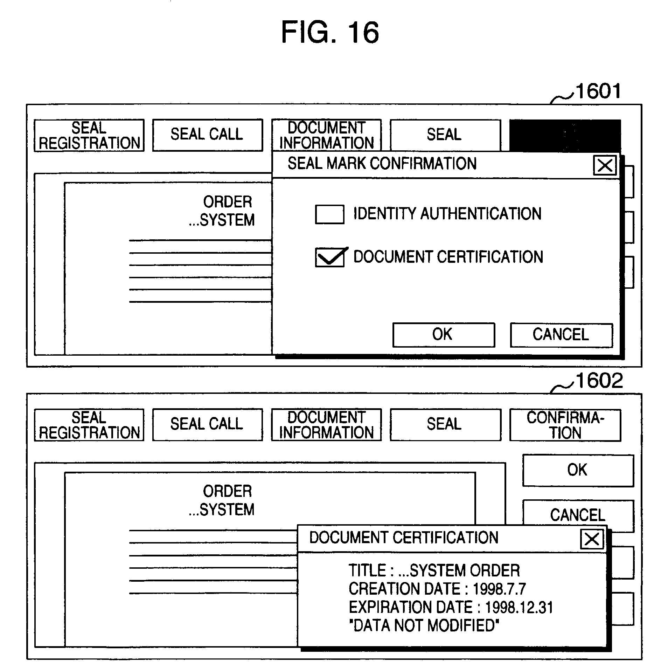

Fig. 15 is a flowchart showing a procedure of document certifying operations in the present embodiment. In beginning steps of the document certifying operation flow, the same parts as those in the identity authenticating operation flow, that is, parts corresponding to the steps 1301 and 1302 in Fig. 13 are omitted in Fig. 15. Fig. 16 shows examples of processing screen images corresponding to the processing flow of Fig. 15 in the present embodiment.

The employee 110 first clicks mark document certification items on the employee terminal 111 as in a processing screen image 1601 in Fig. 16 (step 1501). The mark certification processor 314 extracts from the mark a public key necessary for decoding of the document information and the document certification information, and decodes the document certification information (steps 1502 to 1504).

Next, featured information is extracted from digital data of the document having the mark affixed thereupon, and is compared with the featured information 707 of the document certification information extracted from the mark to find a coincidence or non-coincidence between the featured information (steps 1505 and 1506).

As a result, determination of a non-coincidence between the featured information means that the digital data of the document is different from the digital data thereof at the time of its creation. Thus the mark certification processor 314 displays an error message such as "this data is modified" and modifies the design to an invalid design, for example, by erasing the seal image or applying a mark X to the seal image (steps 1507 and 1508).

When determining a coincidence between the featured information, the mark certification processor 314 further confirms information on expiration date, etc. If OK, then the mark certification processor 314 displays the document information like a step processing screen image 1602 for confirmation (steps 1509 and 1510). When the expiration date 704 is already expired, then the mark certification processor 314 modifies the design to an invalid design, for example, by erasing the seal image or applying a mark X to the seal image (step 1508). In this connection, how to display the document certification result is not limited to the processing screen image example of Fig. 16. For example, the error message may be given in the form of a sound.

For the purpose of preventing a third party from illegally sealing a design, a password may be employed. For increasing the security, however, the password can be managed in the form of an ID card so that, when the password is used, the password can be read out from the ID card by the mark certification processor 314. In this case, when the password is previously encrypted, the security can be further increased.

For the purpose of avoiding such illegal mark use that an unauthorized person gets other's mark having identity authentication information alone embedded therein and embeds document information in the mark with use of his secret key to use it illegally, the mark sealing serial NO. 702 for example is employed. When the authorized user affixes the mark having the document certification information embedded therein at the employee terminal 111, the mark sealing serial NO. 702 is automatically transmitted to the mark management server 101 as log history information, whereby such illegal use can be checked by managing the log information in the mark log management DB 212.

As has been explained in the foregoing, the embodiment of the present invention has been explained in connection with examples of the corporation intra-net and inter-corporation network. However, the present invention is not limited to the specific forms. For example, the invention can be applied to general digital data for transactions on network such as an order sheet created when an individual conducts electronic transactions on network. There may be considered such a method that a self-governing body, which has issued a certificate of seal impression so far, becomes a mark management organization and distributes to a mark applicant a mark having his identity authentication information embedded therein and the mark certification processor 314 in the form of a floppy disk (FD) or the like. The digital data may, in some cases, include contents of information including a signature for attendance or vote confirmation, only the signature being digital data. The digital data is not limited to a document but may include still image data of a map or the like or moving image data. A mark having signature data for attendance or open ballot may be transmitted to the manager terminal, the database or the electronic bulletin or board.

## Claims

1. A digital mark certification system for providing a mark for data certification based on a digital mark, comprising:
a mark management processor (221) for embedding certification information of a mark creation demander in a demander's mark design to create a visible mark on a display in response to demander's request; and
a mark distributor (200-222) for distributing a decoding key for decoding of the mark and the visible mark to a demander's terminal device.

2. A system as set forth in claim 1, comprising a decoding key management database for storing the decoding key therein and a decoding key management processor (222) for transmitting the decoding key to a plurality of mark terminal devices connected to the mark management server.

3. A system as set forth in claim 1 or 2, wherein it can be visually recognized on the display that the certification information is embedded in the created mark.

4. A system as set forth in claim 1, 2 or 3, wherein the certification information is obtained by encrypting information including a demander's feature with use of a cryptograph key.

5. A system as set forth in claim 1, 2, 3 or 4, wherein the mark management processor (221) encrypts information including demander's other feature with use of the cryptograph key to create other certification information of the demander in response to a mark updating request and embeds the other certification information in demander's mark design to create the mark.

6. A system as set forth in claim 1, 2, 3, 4 or 5, wherein, in response to the mark creating request, the mark management processor (221) embeds in the mark design the other certification information that it cannot be visually recognized on the display that the other certification information is embedded in the mark.

7. A system as set forth in claim 6, wherein the certification information and the other certification information are embedded in different positions divided in the mark.

8. A terminal device for attaching a mark for data certification based on a digital mark to digital data, comprising:
a mark processor (312) for transmitting a mark creation request to a digital mark certification system, for receiving from the system a mark obtained by encrypting information including demander's feature with use of a cryptograph key and embedding the certification information in demander's mark design, and for storing the mark therein;
a decoding key database (315) for receiving and storing a decoding key for decoding of the mark; and
a transmitter (303) for encrypting log information on the digital data with use of the cryptograph key, embedding the encrypted log information in the mark, and transmitting the mark together with the digital data.

9. An electronic seal authentication system comprising:
at least one client terminal; and
at least one mark management server for managing a mark to be used at the client terminal,
wherein the mark management server, when receiving a mark registration or modification request from the client terminal, embeds information necessary for identity authentication of a digital data creator in the mark and transmits the information-embedded mark to the client terminal, and the client terminal includes means for embedding information necessary for document certification of the digital data in the mark and means for performing either one of both of the identity authentication and document certification of the digital data.

10. An electronic seal authentication system as set forth in claim 9, wherein the means for performing either one or both of the identity authentication and document certification creates a visible seal mark by adding the information necessary for identity authentication in one of blocks of data of an image at the time of issuing the mark and by adding the information necessary for the document certification in another one of the blocks at the time of sending the document.

11. A digital mark authentication method for providing a mark for data certification based on a digital mark comprising:
a step (1008) of embedding certification information of a mark creation demander in a demander's mark design to create a visible mark on a display in response to demander's request; and
a step (1010) of distributing a decoding key for decoding of the mark and the visible mark to a demander's terminal device.

12. A method as set forth in claim 11, comprising a step (1010) of transmitting the decoding key to a plurality of mark terminal devices connected to the mark management server from a decoding key management database for storage of the decoding key.

13. A method as set forth in claim 11 or 12, wherein it can be visually recognized on the display that the certification information is embedded in the created mark.

14. A method as set forth in claim 11, 12 or 13, comprising a step of encrypting information including a demander's feature with use of a cryptograph key to obtain the certification information.

15. A method as set forth in claim 11, 12, 13 or 14, comprising a step of encrypting information including demander's other feature with use of the cryptograph key to create other certification information of the demander in response to a mark updating request and embedding the other certification information in demander's mark design to create the mark.

16. A method as set forth in claim 11, 12, 13, 14 or 15, comprising a step of, in response to the mark creation request, embedding in the mark design the other certification information that it cannot be visually recognized on the display that the other certification intonation is embedded in the mark.

17. A method as set forth in claim 16, wherein the certification information and the other certification information are embedded in different positions divided in the mark.

18. A method for operating a terminal device for attaching a mark for data certification based on a digital mark to digital data, comprising:
a step (1011) of transmitting a mark creation request to a digital mark certification system, for receiving from the system a mark obtained by encrypting information including demander's feature with use of a cryptograph key and embedding the certification information in demander's mark design, and for storing the mark therein;
a step (1012) of receiving and storing a decoding key for decoding of the mark; and
a step (1116) of encrypting log information on the digital data with use of the cryptograph key, embedding the encrypted log information in the mark, and transmitting the mark together with the digital data.

19. A digital mark certification program for providing a mark for data certification based on a digital mark, comprising:
a step (1008) of embedding certification information of a mark creation demander in a demander's mark design to create a visible mark on a display in response to demander's request; and
a step (1010) of distributing a decoding key for decoding of the mark and the visible mark to a demander's terminal device.

20. A program running on a terminal device for attaching a mark for data certification based on a digital mark to digital data, comprising:
a step (1011) of transmitting a mark creation request to a digital mark certification system, receiving from the system a mark obtained by encrypting information including demander's feature with use of a cryptograph key and embedding the certification information in demander's mark design, and for storing the mark therein;
a step (1012) of receiving and storing a decoding key for decoding of the mark; and
a step (1116) of encrypting log information on the digital data with use of the cryptograph key, embedding the encrypted log information in the mark, and transmitting the mark together with the digital data.
